(19) Europäisches Patentamt
European Patent Office
Office européen des brevets

(11) **EP 4 723 226 A1**

(12) **EUROPEAN PATENT APPLICATION**
published in accordance with Art. 153(4) EPC

(43) Date of publication:
**08.04.2026 Bulletin 2026/15**

(21) Application number: **24815230.8**

(22) Date of filing: **16.05.2024**

(51) International Patent Classification (IPC):
***H01M 4/525*** *(2010.01)* ***H01M 4/36*** *(2006.01)*

(52) Cooperative Patent Classification (CPC):
Y02E 60/10

(86) International application number:
**PCT/JP2024/018129**

(87) International publication number:
**WO 2024/247746 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023088028**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) The present invention provides a positive electrode active material for nonaqueous electrolyte secondary batteries, the positive electrode active material being capable of improving the initial efficiency. This positive electrode active material for nonaqueous electrolyte secondary batteries, which is contained in a nonaqueous electrolyte secondary battery, comprises a lithium transition metal composite oxide and a sulfonic acid compound that is present on the surface of the lithium transition metal composite oxide. The lithium transition metal composite oxide is a secondary particle that has a layered structure and contains 75% by mole or more of Ni with respect to the total number of moles of metal elements excluding Li. In the element concentration distribution of a cross-section of the secondary particle as determined using time-of-flight secondary ion mass spectrometry, the Gini coefficient on the secondary particle surface of SO3- is 0.7 or less. (In the formula, A represents a group 1 element or a group 2 element; R represents a hydrocarbon group; and n is 1 or 2.)

Figure 1

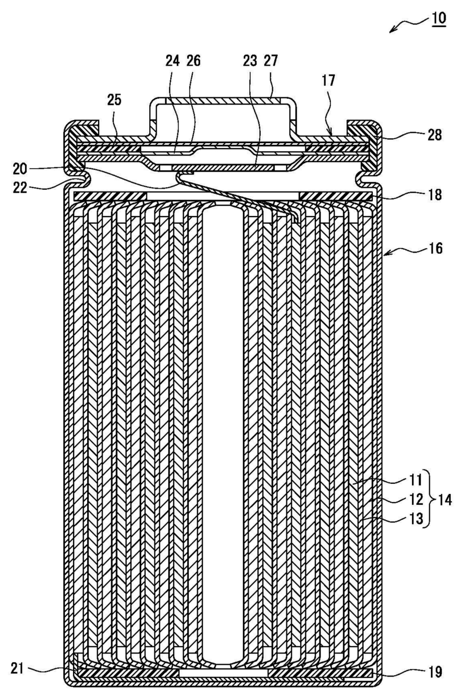


EP 4 723 226 A1

**Description**

TECHNICAL FIELD

The present disclosure relates to a positive electrode active material for non-aqueous electrolyte secondary battery, and a non-aqueous electrolyte secondary battery.

BACKGROUND

In recent years, applications of non-aqueous electrolyte secondary batteries have expanded to power sources for electric vehicles and power storage devices for utilizing renewable natural energy. Characteristics required in positive electrode active materials used in non-aqueous electrolyte secondary batteries vary accordingly depending on the applications. For example, for the purpose of reducing reaction resistance caused as a result of storage at high temperatures, Patent Literature 1 discloses a non-aqueous electrolyte secondary battery that uses, as a positive electrode active material, a lithium transition metal composite oxide having a low-solubility Li salt scattered on its surface.

CITATION LIST

PATENT LITERATURE

PATENT LITERATURE 1: Japanese Unexamined Patent Application Publication No. 2019-169286

SUMMARY

In non-aqueous electrolyte secondary batteries, improving the initial charge-discharge efficiency is an important issue. In the technique described in Patent Literature 1, no consideration has been made for improving the initial efficiency, and there is still room for improvement.

An object of the present disclosure is to provide a positive electrode active material for non-aqueous electrolyte secondary battery which enables to improve the initial efficiency.

A positive electrode active material for non-aqueous electrolyte secondary battery according to one aspect of the present disclosure contains a lithium transition metal composite oxide and a sulfonic acid compound present at the surface of the lithium transition metal composite oxide. The lithium transition metal composite oxide is in the form of secondary particles having a layered structure and containing Ni in an amount of greater than or equal to 75 mol% based on the total number of moles of metal elements other than Li. In an element concentration distribution in a cross section of the secondary particles as determined using time-of-flight secondary ion mass spectrometry, the Gini coefficient of $SO^{3-}$ at the surface of the secondary particles is less than or equal to 0.7.

[Chemical Formula 1]

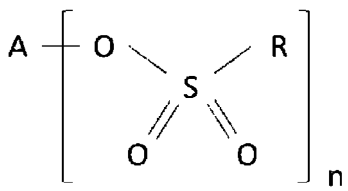

(I)

(where A is a Group 1 or Group 2 element, R is a hydrocarbon group, and n is 1 or 2).

A positive electrode active material for non-aqueous electrolyte secondary battery according to another aspect of the present disclosure contains a lithium transition metal composite oxide and a sulfonic acid compound present at the surface of the lithium transition metal composite oxide. The lithium transition metal composite oxide is in the form of secondary particles having a layered structure and containing Ni in an amount of greater than or equal to 75 mol% based on the total number of moles of metal elements other than Li. In an element concentration distribution in a cross section of the secondary particles as determined using time-of-flight secondary ion mass spectrometry, the Gini coefficient of $SO^{3-}$ in the interior of the secondary particles is less than or equal to 0.6.

[Chemical Formula 2]

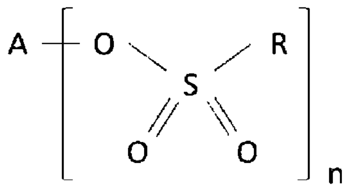

( I )

(where A is a Group 1 or Group 2 element, R is a hydrocarbon group, and n is 1 or 2).

A non-aqueous electrolyte secondary battery according to one aspect of the present disclosure includes a positive electrode containing the above-described positive electrode active material, a negative electrode, and a non-aqueous electrolyte, wherein the negative electrode contains S.

According to a positive electrode active material for non-aqueous electrolyte secondary battery according to one aspect of the present disclosure, it is possible to improve the initial efficiency of a non-aqueous electrolyte secondary battery.

BRIEF DESCRIPTION OF DRAWINGS

FIG. 1 is a longitudinal cross-sectional view of a non-aqueous electrolyte secondary battery according to an example embodiment.

DESCRIPTION OF EMBODIMENTS

As noted above, in a non-aqueous electrolyte secondary battery, improving the initial efficiency is an important issue. The present inventors have discovered that by causing a sulfonic acid compound to be present at the surface of particles of a predetermined lithium transition metal oxide and uniformly dispersing the sulfonic acid compound until the Gini coefficient of the depth map intensity ratio distribution of $SO^{3-}$ as analyzed by TOF-SIMS becomes less than or equal to 0.7, the protective effect of a coating containing the sulfonic acid compound is exhibited notably, which results in facilitating insertion and extraction of $Li^+$ and improving the initial efficiency. An example embodiment of the present disclosure will be described in detail below by reference to the drawings.

An example embodiment of a non-aqueous electrolyte secondary battery according to the present disclosure will now be described in detail. In the following description, specific numerical values, materials, and designs may be referred to by way of example, but any other numerical values, materials, and designs may be applied so long as the advantageous effects of the present disclosure can be obtained. Although a cylindrical battery in which a spiral-type electrode assembly is housed in a cylindrical outer casing will be referred to below by way of example, the electrode assembly is not limited to being of a spiral type, and may be of a laminated type formed by alternately laminating a plurality of positive electrodes and a plurality of negative electrodes one by one with separators interposed. Further, the outer casing is not limited to being cylindrical, and may be, for example, rectangular, coin-shaped, or the like, or may be a battery housing composed of a laminate sheet including a metal layer and a resin layer.

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and a separator 13, and has a spiral structure formed by winding the positive electrode 11 and the negative electrode 12 in a spiral shape with the separator 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom of the outer casing 16 will be referred to as "lower".

The positive electrode 11, the negative electrode 12, and the separator 13, which constitute the electrode assembly 14, are all elongate rectangular members, and are alternately laminated in the radial direction of the electrode assembly 14 by being wound lengthwise in a spiral shape. The separator 13 isolates the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. Two sheets of the separator 13 are formed to have a size slightly larger than at least the positive electrode 11, and are arranged, for example, to sandwich the positive electrode 11. The electrode assembly 14 has a positive electrode lead 20 connected to the positive electrode 11 by welding

or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of the side wall projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped against the sealing assembly 17.

The sealing assembly 17 has a structure obtained by laminating, in order from the electrode assembly 14 side, the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separator 13, and the non-aqueous electrolyte, which constitute the secondary battery 10, and in particular regarding the positive electrode 11.

The positive electrode 11 comprises, for example, a positive electrode core and a positive electrode mixture layer formed on the surface of the positive electrode core. The positive electrode mixture layer is preferably formed on both sides of the positive electrode core. As the positive electrode core, it is possible to use a foil of a metal such as aluminum or an aluminum alloy which is stable in the potential range of the positive electrode 11, a film having such metal disposed on its surface layer, or the like. The thickness of the positive electrode core is, for example, greater than or equal to 10 μm and less than or equal to 30 μm. The positive electrode mixture layer contains, for example, a positive electrode active material, a conductive agent, and a binder. The thickness of the positive electrode mixture layer is, for example, greater than or equal to 10 μm and less than or equal to 150 μm on one side of the positive electrode current collector. The positive electrode 11 can be produced, for example, by applying a positive electrode mixture slurry containing the positive electrode active material, the conductive agent, the binder, and the like onto the surfaces of the positive electrode current collector, and, after drying the applied coating, rolling the coating to form a positive electrode mixture layer on both sides of the positive electrode current collector.

Examples of the conductive agent contained in the positive electrode mixture layer include carbon-based materials, including carbon black (CB) such as acetylene black (AB) and Ketjenblack, carbon nanotubes (CNT), graphene, and graphite. A single type among these may be used alone, or two or more types may be used in combination. The content of the conductive agent in the positive electrode mixture layer is, for example, greater than or equal to 0.1 mass% and less than or equal to 10 mass% based on the total mass of the positive electrode mixture layer.

Examples of the binder contained in the positive electrode mixture layer include fluororesins such as polytetrafluoroethylene (PTFE) and polyvinylidene fluoride (PVDF), polyacrylonitrile (PAN), polyimide resins, acrylic resins, and polyolefin resins. A single type among these may be used alone, or two or more types may be used in combination. The content of the binder in the positive electrode mixture layer is, for example, greater than or equal to 0.1 mass% and less than or equal to 10 mass% based on the total mass of the positive electrode mixture layer.

The positive electrode active material contained in the positive electrode mixture layer 31 includes a lithium transition metal composite oxide in particulate form. The lithium transition metal composite oxide particles include, for example, secondary particles formed by aggregation of primary particles. The particle size of the primary particles is, for example, greater than or equal to 0.02 μm and less than or equal to 2 μm. The particle size of a primary particle is measured

as a diameter of a circle circumscribing a particle image observed by a scanning electron microscope (SEM). The average particle size of the secondary particles is, for example, greater than or equal to 2 μm and less than or equal to 30 μm. Here, the average particle size denotes the volume-based median diameter (D50). D50 means a particle size at which, in a volume-based particle size distribution, the cumulative frequency from the smaller particle size end reaches 50 %, and is also called the mid-level diameter. The particle size distribution of the secondary particles can be measured with a laser diffraction particle size distribution measuring device (e.g., MT3000II manufactured by MicrotracBEL Corp.) using water as the dispersion medium.

The lithium transition metal composite oxide particles include, for example, single particles, or secondary particles formed by aggregation of single particles in a number of more than or equal to 2 and less than or equal to 1000. The average particle size of the single particles is preferably greater than or equal to 0.5 μm and less than or equal to 5 μm, and more preferably greater than or equal to 0.7 μm and less than or equal to 4 μm. Since single particles function in the same manner as secondary particles, the term "secondary particles" hereinafter encompasses single particles.

The lithium transition metal composite oxide has a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer, a Li layer, and an oxygen layer.

The lithium transition metal composite oxide contains Ni in an amount of greater than or equal to 75 mol% based on the total number of moles of metal elements other than Li. With this feature, a high battery capacity can be achieved. The Ni content is, for example, greater than or equal to 80 mol% and less than or equal to 98 mol%. The lithium transition metal composite oxide may contain, in addition to Ni, one or more elements selected from the group consisting of Co, Al, and Mn. The content of each of Co, Al, and Mn in the lithium transition metal composite oxide is, for example, greater than or equal to 0 mol% and less than or equal to 25 mol% based on the total number of moles of metal elements other than Li. Further, the total content of Co, Al, and Mn is, for example, greater than or equal to 0 mol% and less than or equal to 25 mol%.

The lithium transition metal composite oxide is, for example, a composite oxide represented by the general formula $Li_aNi_xM1_yM2_zO_{2-b}$ (where $0.8 \le a \le 1.2$, $0.75 \le x \le 0.98$, $0 \le y \le 0.25$, $0 \le z \le 0.10$, $0 \le b \le 0.05$, $x+y+z = 1$, M1 is one or more elements selected from the group consisting of Co, Al, and Mn, and M2 is one or more elements selected from the group consisting of Sr, Ca, Nb, Ti, Zr, and W). The ratio of the metal elements contained in the lithium transition metal composite oxide can be measured, for example, by inductively coupled plasma atomic emission spectrometer (ICP-AES).

The lithium transition metal composite oxide is produced by carrying out the following processes: a first process of synthesizing a transition metal composite hydroxide containing Ni, Co, Mn, Al, and the like using, for example, a co-precipitation method; a second process of heat-treating the composite hydroxide to obtain a transition metal composite oxide; and a third process of mixing the composite oxide with lithium hydroxide and firing the mixture.

In the third process, the above-noted mixture is fired at a temperature of higher than or equal to 650 °C. A suitable range of the firing temperature is higher than or equal to 650 °C and lower than or equal to 1100 °C. The firing is preferably carried out in an oxygen stream. In the third process, from the perspective of discharge capacity, the lithium source (i.e., lithium hydroxide) is used in an amount in excess of that according to the stoichiometric ratio of the intended product. For example, in terms of stoichiometric ratio, the amount is preferably more than or equal to 1 time and less than or equal to 1.1 times the amount of the composite oxide. Further, by adjusting the firing conditions, the particle size of the primary particles can be adjusted, and single particles can also be produced. For example, by increasing the maximum temperature reached, the particle size of the single particles can be increased.

The positive electrode active material contains, in addition to the lithium transition metal composite oxide, a sulfonic acid compound represented by general formula I below. The sulfonic acid compound is present at the surface of the lithium transition metal composite oxide.

[Chemical Formula 3]

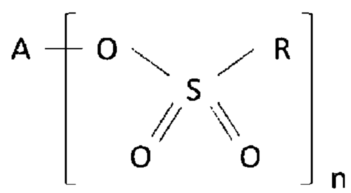

(I)

(where A is a Group 1 or Group 2 element, R is a hydrocarbon group, and n is 1 or 2.)

In an element concentration distribution in a cross section of secondary particles of the lithium transition metal

composite oxide as determined using time-of-flight secondary ion mass spectrometry, the Gini coefficient of $SO^{3-}$ at the surface of the secondary particles may be less than or equal to 0.7, is preferably less than or equal to 0.6, and is more preferably less than or equal to 0.5. With this feature, the initial efficiency is improved. Since $SO^{3-}$ is detected deriving from the sulfonic acid compound, when the Gini coefficient of $SO^{3-}$ at the surface of the secondary particles is smaller, the sulfonic acid compound is more uniformly dispersed at the surface of the secondary particles. The Gini coefficient of $SO^{3-}$ at the surface of the secondary particles is, for example, greater than or equal to 0.1.

In an element concentration distribution in a cross section of secondary particles of the lithium transition metal composite oxide as determined using time-of-flight secondary ion mass spectrometry, the Gini coefficient of $SO^{3-}$ in the interior of the secondary particles may be less than or equal to 0.6, is preferably less than or equal to 0.55, and is more preferably less than or equal to 0.5. With this feature, the initial efficiency is improved. Since $SO^{3-}$ is detected deriving from the sulfonic acid compound, when the Gini coefficient of $SO^{3-}$ in the interior of the secondary particles is smaller, the sulfonic acid compound is more uniformly dispersed in the interior of the secondary particles. The Gini coefficient of $SO^{3-}$ in the interior of the secondary particles is, for example, greater than or equal to 0.1.

The Gini coefficient of $SO^{3-}$ at the surface of the secondary particles is a value calculated by doubling the area enclosed between the diagonal line and the Lorenz curve obtained when the cumulative percentage of the normalized intensity $I_{SO3-_OUT}$ of $SO^{3-}$ at the surface of the secondary particles is expressed in order of intensity. The Gini coefficient of $SO^{3-}$ in the interior of the secondary particles is a value calculated by doubling the area enclosed between the diagonal line and the Lorenz curve obtained when the cumulative percentage of the normalized intensity $I_{SO3^-_IN}$ of $SO^{3-}$ in the interior of the secondary particles is expressed in order of intensity. A Gini coefficient is equal to 0 in the case of perfect uniformity, and increases as uniformity decreases. The Gini coefficient of $SO^{3-}$ in the interior of the secondary particles may be less than the Gini coefficient of $SO^{3-}$ at the surface of the secondary particles, or may be greater than or equal to the Gini coefficient of $SO^{3-}$ at the surface of the secondary particles. When the Gini coefficient of $SO^{3-}$ in the interior of the secondary particles is greater than or equal to the Gini coefficient of $SO^{3-}$ at the surface of the secondary particles, the advantageous effects of the present disclosure may be exhibited notably.

The normalized intensity ratio of $SO^{3-}$ is obtained by performing measurement using a time-of-flight secondary ion mass spectrometer (TOF-SIMS5 manufactured by IONTOF GmbH) under the following conditions.

Primary ion: $Bi^{3+}$
Ion voltage: 30 kV
Ion current: 0.03 pA @ 100 us
Observation range: 50 μm × 50 μm
Mass range: 60 us (up to 310 amu)
Detection: 4 frames/scan; 150 scans

An image obtained by the above measurement, which shows the concentration distribution of Ni and $SO^{3-}$, is divided into 256×256 pixels, and for each pixel, detection intensities of Ni and $SO^{3-}$ are respectively calculated. Further, the ratio of the detection intensity of $SO^{3-}$ to the detection intensity of Ni is calculated as normalized $SO^{3-}$ intensity $I_{SO3-}$.

A region from the outer face of the secondary particles to 0.5 μm toward the inside as recognized in the above image is determined as the surface of the secondary particles, and pixels included in this surface of the secondary particles (hereinafter referred to as the surface pixels) are identified. A set of $I_{SO3-}$ values corresponding to the respective surface pixels serve as $I_{SO3-_OUT}$. Further, a region toward the inside from the above-defined surface of the secondary particles is determined as the interior of the secondary particles, and pixels included in this interior of the secondary particles (hereinafter referred to as the interior pixels) are identified. A set of $I_{SO3-}$ values corresponding to the respective interior pixels serve as $I_{SO3-_IN}$. Based on $I_{SO3-_OUT}$ and $I_{SO3-_IN}$, the Gini coefficient of $SO^{3-}$ at the surface of the secondary particles and the Gini coefficient of $SO^{3-}$ in the interior of the secondary particles are calculated. A sample used for the cross-sectional observation may be a sample obtained by embedding the lithium transition metal composite oxide in a resin or the like, or may be a positive electrode mixture layer containing the lithium transition metal composite oxide.

In the above general formula I, A is preferably a Group 1 element, and more preferably Li. With this feature, the DC resistance can be further reduced. It is noted that when A is a Group 1 element, n = 1.

In general formula I, R is preferably an alkyl group. R is more preferably an alkyl group having 5 or less carbon atoms, even more preferably an alkyl group having 3 or less carbon atoms, and particularly preferably a methyl group. Further, in R, some of the hydrogen atoms bonded to the carbon atoms may be substituted with fluorine atoms. However, in R, not all of the hydrogen atoms bonded to the carbon atoms are substituted with fluorine atoms. The DC resistance can be further reduced when the molecular weight of R is smaller.

Examples of the sulfonic acid compound include lithium methanesulfonate, lithium ethanesulfonate, lithium propanesulfonate, sodium methanesulfonate, magnesium methanesulfonate, and lithium fluoromethanesulfonate.

The amount of the sulfonic acid compound contained in the positive electrode 11 is preferably greater than or equal to 0.1 mass% and less than or equal to 1.5 mass%, and more preferably greater than or equal to 0.25 mass% and

less than or equal to 1.0 mass%, based on the mass of the lithium transition metal composite oxide.

Presence of the sulfonic acid compound in the positive electrode 11 can be confirmed by Fourier transform infrared spectroscopy (FT-IR). In an infrared absorption spectrum obtained by FT-IR, the positive electrode 11 may have an absorption peak at at least one of positions around 1238 $cm^{-1}$, 1175 $cm^{-1}$, 1065 $cm^{-1}$, and 785 $cm^{-1}$.

In an infrared absorption spectrum obtained by FT-IR, for example, a positive electrode 11 containing lithium methanesulfonate has absorption peaks around 1238 $cm^{-1}$, 1175 $cm^{-1}$, 1065 $cm^{-1}$, and 785 $cm^{-1}$. The peaks around 1238 $cm^{-1}$, 1175 $cm^{-1}$, and 1065 $cm^{-1}$ are absorption peaks caused by SO stretching vibration derived from lithium methanesulfonate. The peak around 785 $cm^{-1}$ is an absorption peak caused by CS stretching vibration derived from lithium methanesulfonate.

Likewise, in the case of a positive electrode 11 containing a sulfonic acid compound other than lithium methanesulfonate, absorption peaks derived from the sulfonic acid compound can be identified as in the case of a positive electrode 11 containing lithium methanesulfonate. It is noted that presence of the sulfonic acid compound in the positive electrode 11 can also be confirmed by ICP, atomic absorption spectrometry, X-ray photoelectron spectroscopy (XPS), synchrotron radiation XRD measurement, TOF-SIMS, and the like.

A metal compound may be present at the surface of the lithium transition metal composite oxide. The metal compound contains, for example, one or more metal elements selected from the group consisting of Sr, Ca, W, Zr, rare earth elements, and Al. Examples of such compound containing Sr include SrO, $Sr(OH)_2$, and $SrCO_3$. Examples of such compound containing Ca include CaO, $Ca(OH)_2$, and $CaCO_3$. An example of such compound containing W is $WO_3$. An example of such compound containing Al is $Al_2O_3$. Examples of such compound containing Zr include $ZrO_2$, $Zr(OH)_4$, $Zr(CO_3)_2$, and $Zr(SO_4)_2$•$4H_2O$. Examples of such compound containing a rare earth element include oxides, hydroxides, carbonates, sulfates, nitrates, and phosphates of rare earth elements. Further, the metal compound may contain a plurality of these metal elements, and examples of such metal compound include $SrAlO_4$ and $CaAlO_4$. The metal compound may further contain Li, and an example of such metal compound is lithium tungstate.

A non-metal compound may be present at the surface of the lithium transition metal composite oxide. The non-metal compound contains, for example, one or more non-metal elements selected from the group consisting of P and B. An example of such compound containing P is $Li_{3-x}H_xPO_4$ (where $0 \leq x \leq 3$). Examples of such compound containing B include $H_3BO_3$, $Li_3BO_3$, and $Li_2B_4O_7$.

The positive electrode active material can be produced, for example, by adding a sulfonic acid solution to the lithium transition metal composite oxide and attaching the sulfonic acid compound to the surface of the lithium transition metal composite oxide (adding process). The lithium transition metal composite oxide may be subjected to a washing process and a drying process.

In the washing process, the lithium transition metal composite oxide is washed with water and dehydrated to obtain a cake-like composition. The washing with water and dehydration can be performed using known methods and conditions, and may be carried out within an extent that does not cause deterioration of battery characteristics due to lithium elution from the lithium transition metal composite oxide. It is noted that since the positive electrode active material according to the present embodiment is washed with water, only a small amount of residual alkaline component is contained.

In the drying process, the cake-like composition obtained in the washing process is dried to obtain a powder-like composition. The drying process may be carried out in a vacuum atmosphere. The drying conditions are, for example, a temperature of higher than or equal to 150 °C and lower than or equal to 400 °C, and a duration of more than or equal to 0.5 hours and less than or equal to 15 hours. Heat treatment may be performed after the drying process. The heating temperature is, for example, higher than or equal to 100 °C and lower than or equal to 450 °C. The heat treatment may be carried out after the disaggregation process described below.

The powder-like composition obtained in the drying process can be disaggregated to obtain single particles. For the disaggregation, a jet mill or the like can be used. The disaggregation by a jet mill can be carried out using, for example, PJM-80 (manufactured by Nippon Pneumatic Mfg. Co., Ltd.) under the following conditions.

Compressed air consumption: 0.5 $Nm^3$/min
Supply gas pressure: 0.53 MPa
Processing capacity: 2000 g/hour

In the adding process, at least one of a sulfonic acid compound and a sulfonic acid solution is added to the cake-like composition obtained in the washing process or to the powder-like composition obtained in the drying process. By doing so, the sulfonic acid compound can be attached to the surface of the lithium transition metal composite oxide. At least one of the sulfonic acid compound and the sulfonic acid solution is preferably added to the cake-like composition. The sulfonic acid compound may be in the form of either a powder or a solution. The sulfonic acid solution is, for example, a methanesulfonic acid solution obtained by dissolving methanesulfonic acid in water. Since a Li compound remains present in the cake-like composition and this residual Li compound is dissolved in the water contained in the cake-like composition,

even when the sulfonic acid solution is added, a sulfonic acid compound containing Li is formed. From the perspective of easily obtaining the advantageous effects of the present disclosure, a Li compound or a Li compound solution may be added to the cake-like composition or the powder-like composition together with the sulfonic acid solution, or alternatively, a mixed solution obtained by premixing the sulfonic acid solution and a Li compound or a Li compound solution may be added to the cake-like composition or the powder-like composition. The Li compound is, for example, LiOH, and the Li compound solution is, for example, a LiOH solution obtained by dissolving LiOH in water. The amounts of the Li compound and the sulfonic acid solution added to the cake-like composition preferably satisfy the following relationship in molar ratio: $0 \leq$ Li compound / sulfonic acid $\leq 1.3$. The amount of the sulfonic acid compound or sulfonic acid added is preferably greater than or equal to 0.1 mass% and less than or equal to 1 mass%, and more preferably greater than or equal to 0.3 mass% and less than or equal to 0.8 mass%, based on the mass of the lithium transition metal composite oxide. The concentration of each of the sulfonic acid solution and the sulfonic acid compound solution is, for example, greater than or equal to 0.5 mass% and less than or equal to 40 mass%. The adding process may be carried out at a point during the washing process, after the washing process, during the drying process, or after the drying process, and the timing of the adding process can be changed as appropriate.

By carrying out mixing after adding at least one of a sulfonic acid compound and a sulfonic acid solution to the cake-like composition or the powder-like composition, dispersion of the sulfonic acid compound at the surface and in the interior of the lithium transition metal composite oxide is improved. That is, the mixing can reduce the Gini coefficients of $SO^{3-}$ at the surface and in the interior of the secondary particles. This mixing may be carried out, for example, using a mixer at a rotation speed of greater than or equal to 10 rpm and less than or equal to 100 rpm for a duration of more than or equal to 0.1 minutes and less than or equal to 60 minutes.

A metal compound containing one or more metal elements selected from the group consisting of Sr, Ca, W, Zr, rare earth elements, and Al, as well as a non-metal compound containing one or more non-metal elements selected from the group consisting of P and B, can be attached to the surface of the lithium transition metal composite oxide, for example, by adding raw materials of the metal compound and the non-metal compound at a point during the synthesis process, after the synthesis process, during the washing process, after the washing process, during the drying process, after the drying process, or during the adding process. Examples of a Sr raw material include $Sr(OH)_2$, $Sr(OH)_2{\bullet}8H_2O$, SrO, $SrCO_3$, $SrSO_4$, $Sr(NO_3)_2$, $SrCl_2$, and $SrAlO_4$. Examples of a Ca raw material include $Ca(OH)_2$, CaO, $CaCO_3$, $CaSO_4$, $Ca(NO_3)_2$, $CaCl_2$, and $CaAlO_4$. Examples of a Zr raw material include $Zr(OH)_4$, $ZrO_2$, $Zr(CO_3)_2$, and $Zr(SO_4)_2{\bullet}4H_2O$. Examples of a rare earth raw material include oxides, hydroxides, carbonates, and the like of rare earth elements. Examples of a W raw material include tungsten oxide ($WO_3$) and lithium tungstate ($Li_2WO_4$, $Li_4WO_5$, $Li_6W_2O_9$). As the W raw material, a solution containing W may be used. Further, as an Al raw material, while $Al_2O_3$, $Al(OH)_3$, $Al_2(SO_4)_3$, and the like may be used, the Al raw material may be Al derived from the lithium transition metal composite oxide. An example of a P raw material is $Li_{3-x}H_xPO_4$ (where $0 \leq x \leq 3$). Examples of a B raw material include $H_3BO_3$, $Li_3BO_3$, and $Li_2B_4O_7$. These compounds may be used after pulverizing and changing the particle size as appropriate, and may also be used after adjusting the water content including hydrates.

The positive electrode mixture layer may contain other positive electrode active materials in addition to the positive electrode active material of the present embodiment described above. Examples of such other positive electrode active materials include a positive electrode active material containing a lithium transition metal composite oxide having a Ni content of less than 75 mol%, and a positive electrode active material in which no sulfonic acid compound is present at the surface of a lithium transition metal composite oxide.

[Negative Electrode]

The negative electrode 12 may include, for example, a negative electrode core and a negative electrode mixture layer formed on the surface of the negative electrode core, or alternatively, a metallic Li foil may be used as the negative electrode 12. Further, the negative electrode 12 may have a negative electrode core, and lithium metal may deposit on the surface of the negative electrode core as a result of charging. When the negative electrode 12 has a negative electrode mixture layer, the negative electrode mixture layer is preferably formed on both sides of the negative electrode core. As the negative electrode core, it is possible to use a foil of a metal such as copper or a copper alloy which is stable in the potential range of the negative electrode 12, a film having such metal disposed on its surface layer, or the like. The thickness of the negative electrode core is, for example, greater than or equal to 5 $\mu$m and less than or equal to 30 $\mu$m. The negative electrode mixture layer contains, for example, a negative electrode active material and a binder. The thickness of the negative electrode mixture layer is, for example, greater than or equal to 10 $\mu$m and less than or equal to 150 $\mu$m on one side of the negative electrode core. The negative electrode 12 can be produced, for example, by applying a negative electrode mixture slurry containing the negative electrode active material, the binder, and the like onto the surfaces of the negative electrode core, and, after drying the applied coating, rolling the coating to form a negative electrode mixture layer on both sides of the negative electrode core.

No particular limitation is imposed on the negative electrode active material contained in the negative electrode

mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si or Sn, a metal compound containing Si, Sn, or the like, a lithium-titanium composite oxide, and the like may be used. These materials having a carbon coating provided thereon may also be used. For example, in combination with graphite, it is possible to use a Si-containing compound represented by $SiO_x$ (where $0.5 \leq x \leq 1.6$), a Si-containing compound in which fine particles of Si are dispersed in a lithium silicate phase represented by $Li_{2y}SiO_{(2+y)}$ (where $0 < y < 2$), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (such as PAA-Na or PAA-K, which may be a partially neutralized salt), and polyvinyl alcohol (PVA). A single type among these may be used alone, or two or more types may be used in combination.

The negative electrode 12 preferably contains S. With this feature, the initial efficiency is further improved. For example, by subjecting the secondary battery 10 to aging treatment, part of S contained in the above-described positive electrode 11 can be moved to the negative electrode 12. The S content in the negative electrode 12 is, for example, greater than or equal to 10 mass ppm and less than or equal to 1000 mass ppm based on the total mass of the negative electrode active material. The S content in the negative electrode 12 can be quantified, for example, by an ICP atomic emission spectrometer (ICP-AES). The aging treatment can be carried out, for example, by charging the battery at a constant current of greater than or equal to 0.1 C and less than or equal to 0.5 C for a duration of more than or equal to 10 minutes and less than or equal to 60 minutes, and then storing the battery in a temperature environment of higher than or equal to 40 °C and lower than or equal to 80 °C for a duration of more than or equal to 10 hours and less than or equal to 20 hours.

[Separator]

As the separator 13, a porous sheet having ion permeability and insulation property is used. Specific examples of the porous sheet include a microporous thin film, woven fabric, and non-woven fabric. As the material of the separator 13, polyolefins such as polyethylene and polypropylene, cellulose, and the like are suitable. The separator 13 may have a single-layer structure or a laminated structure. Further, on the surface of the separator 13, a highly heat-resistant resin layer made of aramid resin or the like may be formed.

A filler layer containing an inorganic filler may be formed at the interface between the separator 13 and at least one of the positive electrode 11 and the negative electrode 12. Examples of the inorganic filler include oxides and phosphoric acid compounds containing metal elements such as Ti, Al, Si, and Mg. The filler layer can be formed by applying a slurry containing the filler onto the surface of the positive electrode 11, the negative electrode 12, or the separator 13.

[Non-Aqueous Electrolyte]

The non-aqueous electrolyte has, for example, lithium ion conductivity. The non-aqueous electrolyte may be either a liquid electrolyte (or electrolyte solution) or a solid electrolyte.

The liquid electrolyte (or electrolyte solution) contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least some of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and

tetraethylene glycol dimethyl ether.

The electrolyte salt is preferably a lithium salt. Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, phosphates, borates, and imide salts. Examples of the phosphates include lithium difluorophosphate ($LiPO_2F_2$), lithium difluorobis(oxalato)phosphate (LiDFBOP), and lithium tetrafluoro(oxalato)phosphate. Examples of the borates include lithium bis(oxalato)borate (LiBOB), lithium difluoro(oxalato)borate (LiDFOB). As the imide salts, the following are used: lithium bis(fluorosulfonyl) imide ($LiN(FSO_2)_2$), lithium bis(trifluoromethanesulfonate) imide ($LiN(CF_3SO_2)_2$), lithium trifluoromethanesulfonate nonafluorobutanesulfonate imide ($LiN(CF_3SO_2)(C_4F_9SO_2)$), lithium bis(pentafluoroethanesulfonate) imide ($LiN(C_2F_5SO_2)_2$), and the like. Among the foregoing, it is preferable to use $LiPF_6$ from the perspective of ion conductivity, electrochemical stability, and the like. The concentration of the lithium salt per 1 liter of the non-aqueous solvent may be, for example, less than or equal to 4 mol, or less than or equal to 3 mol, and is preferably less than or equal to 1.8 mol, and more preferably greater than or equal to 0.8 mol and less than or equal to 1.8 mol.

The non-aqueous electrolyte may contain an additive. Examples of the additive include unsaturated carbonate esters, acid anhydrides, phenol compounds, benzene compounds, nitrile compounds, isocyanate compounds, sultone compounds, sulfuric acid compounds, borate ester compounds, phosphate ester compounds, and phosphite ester compounds.

Examples of the unsaturated cyclic carbonate esters include vinylene carbonate, 4-methyl vinylene carbonate, 4,5-dimethyl vinylene carbonate, 4-ethyl vinylene carbonate, 4,5-diethyl vinylene carbonate, 4-propyl vinylene carbonate, 4,5-dipropyl vinylene carbonate, 4-phenyl vinylene carbonate, 4,5-diphenyl vinylene carbonate, vinyl ethylene carbonate, and divinyl ethylene carbonate. A single type of unsaturated cyclic carbonate ester may be used alone, or two or more types may be used in combination. In the unsaturated cyclic carbonate ester, some of the hydrogen atoms may be substituted with fluorine atoms. The acid anhydrides may be anhydrides formed by intermolecular condensation of a plurality of carboxylic acid molecules, but are preferably acid anhydrides of polycarboxylic acid. Examples of the acid anhydrides of polycarboxylic acid include succinic anhydride, maleic anhydride, and phthalic anhydride.

Examples of the phenol compounds include phenol and hydroxytoluene. Examples of the benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanato) methylcyclohexane (BIMCH). Examples of the sultone compounds include propane sultone and propene sultone. Examples of the sulfuric acid compounds include ethylene sulfate, ethylene sulfite, dimethyl sulfate, and lithium fluorosulfate. Examples of the borate ester compounds include trimethyl borate and tris(trimethylsilyl) borate. Examples of the phosphate ester compounds include trimethyl phosphate and tris(trimethylsilyl) phosphate. Examples of the phosphite ester compounds include trimethyl phosphite and tris(trimethylsilyl) phosphite.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

EXAMPLES

While the present disclosure will now be further described using Examples, the present disclosure is not limited to the Examples below.

<Example 1-1>

[Production of Positive Electrode Active Material]

A nickel-cobalt-aluminum composite hydroxide ($[Ni_{0.90}Co_{0.05}Al_{0.05}](OH)_2$) obtained by a co-precipitation method was fired at 500 °C for 8 hours, and a composite oxide containing Ni, Co, and Al was synthesized. This composite oxide and LiOH were mixed together in a molar ratio of 1:1.02, and the mixture was fired in an oxygen stream at 800 °C for 3 hours to obtain a lithium transition metal composite oxide. The lithium transition metal composite oxide was in the form of secondary particles formed by aggregation of primary particles.

To the above-described lithium transition metal composite oxide, water was added to obtain a slurry concentration of 1500 g/L, and the slurry was stirred for 15 minutes and then filtered to obtain a cake-like composition (washing

process). To this cake-like composition, lithium methanesulfonate in powder form was added, and the mixture was mixed using a mixer (T.K. HIVIS MIX manufactured by PRIMIX Corporation) at a rotation speed of 25 rpm for 10 minutes (adding process). The amount of lithium methanesulfonate added was 0.5 mass% based on the total mass of the lithium transition metal composite oxide. After the adding process, a drying process was performed in a vacuum atmosphere at 180 °C for 2 hours, and a positive electrode active material of Example 1 was obtained. Presence of lithium methanesulfonate at the surface of the positive electrode active material was confirmed by Fourier transform infrared spectroscopy (FT-IR). The element concentration distribution in a cross section of the positive electrode active material was measured by time-of-flight secondary ion mass spectrometry (TOF-SIMS), and as a result, the Gini coefficients of $SO^{3-}$ at the surface and in the interior of the secondary particles were 0.39 and 0.52, respectively. Further, the positive electrode active material was measured using an ICP atomic emission spectrometer (ICP-AES), and as a result, elements other than Li and O shown in Table 1 below were confirmed to be present.

[Production of Positive Electrode]

A positive electrode mixture slurry was prepared by mixing together 92 parts by mass of the above positive electrode active material, 5 parts by mass of acetylene black (AB), and 3 parts by mass of polyvinylidene fluoride (PVDF), and further adding thereto an appropriate amount of N-methyl-2-pyrrolidone (NMP). Next, the positive electrode mixture slurry was applied onto both sides of a positive electrode core made of aluminum foil, and the applied coating was dried and then rolled using a roller. The resulting product was cut into a predetermined electrode size, and a positive electrode was thereby produced. In a part of the positive electrode, there was provided an exposed portion where a surface of the positive electrode core was exposed.

[Production of Negative Electrode]

Natural graphite was used as the negative electrode active material. A negative electrode mixture slurry was prepared by mixing together the negative electrode active material, sodium carboxymethyl cellulose (CMC-Na), styrene-butadiene rubber (SBR), and lithium methanesulfonate in a solid mass ratio of 100:1:1:0.08 in an aqueous solution. Next, the negative electrode mixture slurry was applied onto both sides of a negative electrode core made of copper foil, and the applied coating was dried and then rolled using a roller. The resulting product was cut into a predetermined electrode size, and a negative electrode was thereby produced. In a part of the negative electrode, there was provided an exposed portion where a surface of the negative electrode core was exposed. The S content in the negative electrode was measured by an ICP atomic emission spectrometer (ICP-AES), and was found to be 250 mass ppm based on the total mass of the negative electrode active material.

[Preparation of Non-Aqueous Electrolyte]

Into a mixed solvent obtained by mixing together ethylene carbonate (EC), ethyl methyl carbonate (EMC), and dimethyl carbonate (DMC) in a volume ratio of 3:3:4, lithium hexafluorophosphate ($LiPF_6$) was dissolved to a concentration of 1.2 mol/L, and a non-aqueous electrolyte was thereby prepared.

[Production of Test Cell]

A positive electrode lead was attached to the exposed portion of the positive electrode, and a negative electrode lead was attached to the exposed portion of the negative electrode. The positive electrode and the negative electrode were wound in a spiral shape with an interposed separator made of polyolefin, and the resulting product was shaped by being pressed in a radial direction to produce a flat-shaped spiral-type electrode assembly. This electrode assembly was placed in an outer casing composed of an aluminum laminate sheet, and after injecting the above non-aqueous electrolyte therein, the opening of the outer casing was sealed to obtain a test cell.

[Evaluation of Initial Efficiency]

In a temperature environment of 25 °C, the above test cell was charged at a constant current of 0.2 C until the battery voltage reached 4.2 V, and then charged at a constant voltage of 4.2 V until the current value reached 0.02 C. The test cell was left to stand for 1 hour, and then discharged at a constant current of 0.2 C until the battery voltage reached 2.5 V. Based on the charge capacity and discharge capacity measured during the above charging and discharging process, the initial efficiency was calculated using the following formula.

$$\text{Initial efficiency} = \text{Discharge capacity} / \text{Charge capacity}$$

<Example 1-2>

A test cell was produced and evaluated in the same manner as in Example 1-1 except that, in the production of the positive electrode active material, the mixing time for mixing the cake-like composition and lithium methanesulfonate in powder form was changed to 3 minutes.

<Examples 1-3 to 1-6>

Test cells were produced and evaluated in the same manner as in Example 1-1 except that, in the production of the positive electrode active material, a lithium methanesulfonate solution prepared by dissolving lithium methanesulfonate in pure water was added instead of lithium methanesulfonate in powder form, and the amount of lithium methanesulfonate added and the mixing time for mixing the cake-like composition and lithium methanesulfonate in powder form were changed as shown in Table 1. In all of the positive electrode active materials, presence of lithium methanesulfonate at the surface was confirmed by Fourier transform infrared spectroscopy (FT-IR).

<Example 1-7>

A test cell was produced and evaluated in the same manner as in Example 1-1 except that, in the adding process in the production of the positive electrode active material, a solution containing methanesulfonic acid and LiOH (hereinafter "the methanesulfonic acid + LiOH solution") prepared by dissolving methanesulfonic acid and LiOH in pure water in a molar ratio of 1:1 was added instead of lithium methanesulfonate in powder form, and the amount of lithium methanesulfonate added was 0.5 mass% based on the total mass of the lithium transition metal composite oxide. The concentration of the added methanesulfonic acid + LiOH solution was 10 mass%, and the methanesulfonic acid + LiOH solution was added such that the amount of lithium methanesulfonate added was as described above. Presence of lithium methanesulfonate at the surface of the positive electrode active material was confirmed by Fourier transform infrared spectroscopy (FT-IR).

<Example 1-8>

A test cell was produced and evaluated in the same manner as in Example 1-2 except that, in the adding process in the production of the positive electrode active material, a solution containing methanesulfonic acid and LiOH (hereinafter "the methanesulfonic acid + LiOH solution") prepared by dissolving methanesulfonic acid and LiOH in pure water in a molar ratio of 1:1 was added instead of lithium methanesulfonate in powder form, and the amount of lithium methanesulfonate added was 0.5 mass% based on the total mass of the lithium transition metal composite oxide. The concentration of the added methanesulfonic acid + LiOH solution was 10 mass%, and the methanesulfonic acid + LiOH solution was added such that the amount of lithium methanesulfonate added was as described above. Presence of lithium methanesulfonate at the surface of the positive electrode active material was confirmed by Fourier transform infrared spectroscopy (FT-IR).

<Example 1-9>

After producing a test cell in the same manner as in Example 1-3, the initial efficiency was evaluated while carrying out an aging treatment as described below. After the evaluation, 250 ppm of S based on the total mass of the negative electrode active material was detected in the negative electrode included in the test cell.

[Evaluation of Initial Efficiency with Aging Treatment]

The above test cell was charged at 0.2 C for 30 minutes in a temperature environment of 25 °C, and then stored in a temperature environment of 60 °C for 15 hours. After that, in a temperature environment of 25 °C, the test cell was again charged at a constant current of 0.2 C until the battery voltage reached 4.2 V, and then charged at a constant voltage of 4.2 V until the current value reached 0.02 C. The test cell was left to stand for 1 hour, and then discharged at a constant current of 0.2 C until the battery voltage reached 2.5 V. Based on the charge capacity and discharge capacity measured during the above charging and discharging process, the initial efficiency was calculated using the following formula. Here, the charge capacity is the sum of a charge capacity resulting from the charging at 0.2 C for 30 minutes, a charge capacity resulting from the charging at 0.2 C until reaching 4.2 V, and a charge capacity resulting from the charging at 4.2 V until reaching 0.02 C.

$$\text{Initial efficiency} = \text{Discharge capacity} / \text{Charge capacity}$$

<Example 1-10>

After producing a test cell in the same manner as in Example 1-4, the initial efficiency was evaluated while carrying out an aging treatment in the same manner as in Example 1-9. After the evaluation, 400 ppm of S based on the total mass of the negative electrode active material was detected in the negative electrode included in the test cell.

<Comparative Example 1-1>

A test cell was produced in the same manner as in Example 1-1 except that, in the production of the positive electrode active material, the mixing of the cake-like composition and lithium methanesulfonate in powder form was not performed. After that, the initial efficiency was evaluated while carrying out an aging treatment in the same manner as in Example 1-9. After the evaluation, 400 ppm of S based on the total mass of the negative electrode active material was detected in the negative electrode included in the test cell.

<Comparative Example 1-2>

A test cell was produced and evaluated in the same manner as in Example 1-1 except that, in the production of the positive electrode active material, the mixing of the cake-like composition and lithium methanesulfonate in powder form was not performed.

<Example 2-1>

[Production of Positive Electrode Active Material]

A nickel-manganese composite hydroxide ($[Ni_{0.80}Mn_{0.20}](OH)_2$) obtained by a co-precipitation method was fired at 500 °C for 8 hours, and a composite oxide containing Ni and Mn was synthesized. This composite oxide and LiOH were mixed together in a molar ratio of 1:1.02, and the mixture was fired in an oxygen stream at 900 °C for 10 hours to obtain a lithium transition metal composite oxide. The lithium transition metal composite oxide was in the form of single particles.

To the above-described lithium transition metal composite oxide, water was added to obtain a slurry concentration of 1500 g/L, and the slurry was stirred for 15 minutes and then filtered to obtain a cake-like composition (washing process). To this cake-like composition, a lithium methanesulfonate solution prepared by dissolving lithium methanesulfonate in pure water was added, and the mixture was mixed using a mixer (T.K. HIVIS MIX manufactured by PRIMIX Corporation) at a rotation speed of 25 rpm for 10 minutes (adding process). The amount of lithium methanesulfonate solution added was 0.25 mass% based on the total mass of the lithium transition metal composite oxide. After the adding process, a drying process was performed in a vacuum atmosphere at 180 °C for 2 hours, and a positive electrode active material of Example 2-1 was obtained. Presence of lithium methanesulfonate at the surface of the positive electrode active material was confirmed by Fourier transform infrared spectroscopy (FT-IR). The element concentration distribution in a cross section of the positive electrode active material was measured by time-of-flight secondary ion mass spectrometry (TOF-SIMS), and as a result, the Gini coefficient of $SO^{3-}$ at the surface of the positive electrode active material was 0.39. Further, the positive electrode active material was measured using an ICP atomic emission spectrometer (ICP-AES), and as a result, elements other than Li and O shown in Table 2 were confirmed to be present.

Using the positive electrode active material of Example 2-1, a test cell was produced and evaluated in the same manner as in Example 1-1.

<Examples 2-2 to 2-4>

Test cells were produced and evaluated in the same manner as in Example 2-1 except that, in the production of the positive electrode active material, the amount of the lithium methanesulfonate solution added and the mixing time for mixing the cake-like composition and the lithium methanesulfonate solution were changed as shown in Table 1. In all of the positive electrode active materials, presence of lithium methanesulfonate at the surface was confirmed by Fourier transform infrared spectroscopy (FT-IR).

<Comparative Example 2-1>

A test cell was produced and evaluated in the same manner as in Example 2-1 except that, in the adding process

in the production of the positive electrode active material, lithium methanesulfonate in powder form was added instead of the lithium methanesulfonate solution prepared by dissolving lithium methanesulfonate in pure water, and the mixing of the cake-like composition and lithium methanesulfonate in powder form was not performed.

The evaluation results of the test cells of the Examples and Comparative Examples are shown in Tables 1 and 2. In Table 1, the initial efficiency values of the test cells of Examples 1-1 to 1-10 and Comparative Example 1-1 are expressed relative to the initial efficiency value of the test cell of Comparative Example 1-2, which is assumed to be 100. In Table 2, the initial efficiency values of the test cells of Examples 2-1 to 2-4 are expressed relative to the initial efficiency value of the test cell of Comparative Example 2-1, which is assumed to be 100. Tables 1 and 2 also show the Gini coefficients of $SO^{3-}$ at the surface and in the interior of the lithium transition metal composite oxide particles, as well as the amount of lithium methanesulfonate added and the mixing time. It is noted that no S was detected in the negative electrodes of the test cells other than those of Examples 1-9, 1-10 and Comparative Example 1-1.

[Table 1]

| | Lithium transition metal composite oxide | | Additive | | | | Aging treatment | Gini coefficients | | Amount of S in negative electrode [ppm] | Initial efficiency |
|---|---|---|---|---|---|---|---|---|---|---|---|
| | Composition [mol%] | Particles | Compound | Method of addition | Amount added [mass%] | Mixing time [min] | | Surface | Interior | | |
| Example 1-1 | NCA 90/5/5 | Secondary particles | Li methanesulfonate | Powder | 0.5 | 10 | No | 0.39 | 0.52 | N.D. | 101.0 |
| Example 1-2 | | Secondary particles | Li methanesulfonate | Powder | 0.5 | 3 | No | 0.43 | 0.58 | N.D. | 100.5 |
| Example 1-3 | | Secondary particles | Li methanesulfonate | Solution | 0.25 | 10 | No | 0.22 | 0.42 | N.D. | 100.9 |
| Example 1-4 | | Secondary particles | Li methanesulfonate | Solution | 0.5 | 10 | No | 0.33 | 0.35 | N.D. | 101.1 |
| Example 1-5 | | Secondary particles | Li methanesulfonate | Solution | 0.5 | 3 | No | 0.36 | 0.39 | N.D. | 100.7 |
| Example 1-6 | | Secondary particles | Li methanesulfonate | Solution | 0.5 | 0.5 | No | 0.45 | 0.42 | N.D. | 100.5 |
| Example 1-7 | | Secondary particles | Li methanesulfonate | Methanesulfonic acid + LiOH solution | 0.5 | 10 | No | 0.34 | 0.36 | N.D. | 101.1 |
| Example 1-8 | | Secondary particles | Li methanesulfonate | Methanesulfonic acid + LiOH solution | 0.5 | 3 | No | 0.34 | 0.39 | N.D. | 100.7 |
| Example 1-9 | | Secondary particles | Li methanesulfonate | Solution | 0.25 | 10 | Yes | 0.35 | 0.41 | 250 | 101.3 |
| Example 1-10 | | Secondary particles | Li methanesulfonate | Solution | 0.5 | 10 | Yes | 0.35 | 0.35 | 400 | 101.5 |
| Comparative Example 1-1 | | Secondary particles | Li methanesulfonate | Powder | 0.5 | - | Yes | 0.78 | 0.68 | 400 | 100.1 |
| Comparative Example 1-2 | | Secondary particles | Li methanesulfonate | Powder | 0.5 | - | No | 0.76 | 0.67 | N.D. | 100 |

[Table 2]

| | Lithium transition metal composite oxide | | Additive | | | | Aging treatment | Gini coefficients | | Amount of S in negative electrode [ppm] | Initial efficiency |
|---|---|---|---|---|---|---|---|---|---|---|---|
| | Composition [mol%] | Particles | Compound | Method of addition | Amount added [mass%] | Mixing time [min] | | Surface | Interior | | |
| Example 2-1 | NM 80/20 | Single particles | Li methanesulfonate | Solution | 0.25 | 10 | No | 0.39 | - | N.D. | 100.6 |
| Example 2-2 | | Single particles | Li methanesulfonate | Solution | 0.5 | 10 | No | 0.35 | - | N.D. | 101.2 |
| Example 2-3 | | Single particles | Li methanesulfonate | Solution | 0.5 | 3 | No | 0.37 | - | N.D. | 100.7 |
| Example 2-4 | | Single particles | Li methanesulfonate | Solution | 0.5 | 30 | No | 0.42 | - | N.D. | 100.4 |
| Comparative Example 2-1 | | Single particles | Li methanesulfonate | Powder | 0.5 | - | No | 0.78 | - | N.D. | 100 |

As shown in Tables 1 and 2, all of the test cells of the Examples had an improved initial efficiency value compared to the corresponding test cells of the Comparative Examples. This tendency is particularly notable in the test cells that have been subjected to aging treatment. Accordingly, it can be seen that the initial efficiency is improved by causing a sulfonic acid compound to be present at the surface of particles of a predetermined lithium transition metal oxide and uniformly dispersing the sulfonic acid compound until the Gini coefficient of the depth map intensity ratio distribution of $SO^{3-}$ as analyzed by TOF-SIMS becomes less than or equal to 0.7.

The present disclosure is further illustrated by the following embodiments.

Configuration 1:

A positive electrode active material for non-aqueous electrolyte secondary battery, containing a lithium transition metal composite oxide and a sulfonic acid compound present at a surface of the lithium transition metal composite oxide, wherein

the lithium transition metal composite oxide is in a form of secondary particles having a layered structure and containing Ni in an amount of greater than or equal to 75 mol% based on a total number of moles of metal elements other than Li, and

in an element concentration distribution in a cross section of the secondary particles as determined using time-of-flight secondary ion mass spectrometry, a Gini coefficient of $SO^{3-}$ at a surface of the secondary particles is less than or equal to 0.7.

[Chemical Formula 4]

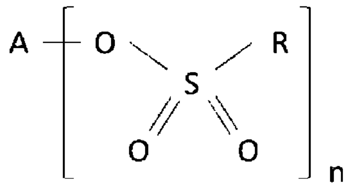

(I)

(where A is a Group 1 or Group 2 element, R is a hydrocarbon group, and n is 1 or 2).

Configuration 2:

A positive electrode active material for non-aqueous electrolyte secondary battery, containing a lithium transition metal composite oxide and a sulfonic acid compound present at a surface of the lithium transition metal composite oxide, wherein

the lithium transition metal composite oxide is in a form of secondary particles having a layered structure and containing Ni in an amount of greater than or equal to 75 mol% based on a total number of moles of metal elements other than Li, and

in an element concentration distribution in a cross section of the secondary particles as determined using time-of-flight secondary ion mass spectrometry, a Gini coefficient of $SO^{3-}$ in an interior of the secondary particles is less than or equal to 0.6.

[Chemical Formula 5]

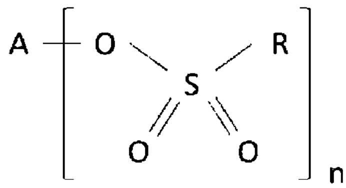

(I)

(where A is a Group 1 or Group 2 element, R is a hydrocarbon group, and n is 1 or 2).

Configuration 3:

The positive electrode active material for non-aqueous electrolyte secondary battery according to Configuration 1 or 2, wherein A is a Group 1 element.

Configuration 4:

The positive electrode active material for non-aqueous electrolyte secondary battery according to Configuration 1 or 2, wherein A is Li.

Configuration 5:

The positive electrode active material for non-aqueous electrolyte secondary battery according to any one of Configurations 1 to 4, wherein R is an alkyl group.

Configuration 6:

The positive electrode active material for non-aqueous electrolyte secondary battery according to any one of Configurations 1 to 4, wherein R is a methyl group.

Configuration 7:

The positive electrode active material for non-aqueous electrolyte secondary battery according to any one of Configurations 1 to 6, wherein an amount of the sulfonic acid compound present at the surface of the lithium transition metal composite oxide is greater than or equal to 0.1 mass% and less than or equal to 1.5 mass% based on a mass of the lithium transition metal composite oxide.

Configuration 8:

The positive electrode active material for non-aqueous electrolyte secondary battery according to any one of Configurations 1 to 7, having, in an infrared absorption spectrum, an absorption peak at at least one of positions around 1238 $cm^{-1}$, 1175 $cm^{-1}$, 1065 $cm^{-1}$, and 785 $cm^{-1}$.

Configuration 9:

A non-aqueous electrolyte secondary battery, comprising a positive electrode containing the positive electrode active material according to any one of Configurations 1 to 8, a negative electrode, and a non-aqueous electrolyte, wherein the negative electrode contains S.

REFERENCE SIGNS LIST

10 secondary battery; 11 positive electrode; 12 negative electrode; 13 separator; 14 electrode assembly; 16 outer casing; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket.

## Claims

**1.** A positive electrode active material for non-aqueous electrolyte secondary battery, containing a lithium transition metal composite oxide and a sulfonic acid compound present at a surface of the lithium transition metal composite oxide, wherein

the lithium transition metal composite oxide is in a form of secondary particles having a layered structure and containing Ni in an amount of greater than or equal to 75 mol% based on a total number of moles of metal elements other than Li, and
in an element concentration distribution in a cross section of the secondary particles as determined using time-of-flight secondary ion mass spectrometry, a Gini coefficient of $SO^{3-}$ at a surface of the secondary particles is less

than or equal to 0.7.

[Chemical Formula 1]

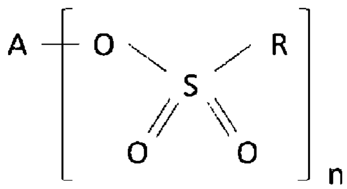

(I)

(where A is a Group 1 or Group 2 element, R is a hydrocarbon group, and n is 1 or 2).

**2.** A positive electrode active material for non-aqueous electrolyte secondary battery, containing a lithium transition metal composite oxide and a sulfonic acid compound present at a surface of the lithium transition metal composite oxide, wherein

the lithium transition metal composite oxide is in a form of secondary particles having a layered structure and containing Ni in an amount of greater than or equal to 75 mol% based on a total number of moles of metal elements other than Li, and
in an element concentration distribution in a cross section of the secondary particles as determined using time-of-flight secondary ion mass spectrometry, a Gini coefficient of $SO^{3-}$ in an interior of the secondary particles is less than or equal to 0.6.

[Chemical Formula 2]

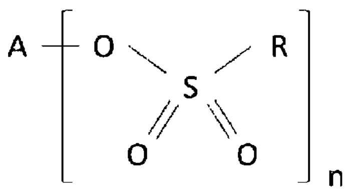

(I)

(where A is a Group 1 or Group 2 element, R is a hydrocarbon group, and n is 1 or 2).

**3.** The positive electrode active material for non-aqueous electrolyte secondary battery according to claim 1 or 2, wherein A is a Group 1 element.

**4.** The positive electrode active material for non-aqueous electrolyte secondary battery according to claim 1 or 2, wherein A is Li.

**5.** The positive electrode active material for non-aqueous electrolyte secondary battery according to claim 1 or 2, wherein R is an alkyl group.

**6.** The positive electrode active material for non-aqueous electrolyte secondary battery according to claim 1 or 2, wherein R is a methyl group.

**7.** The positive electrode active material for non-aqueous electrolyte secondary battery according to claim 1 or 2, wherein an amount of the sulfonic acid compound present at the surface of the lithium transition metal composite oxide is greater than or equal to 0.1 mass% and less than or equal to 1.5 mass% based on a mass of the lithium transition metal composite oxide.

**8.** The positive electrode active material for non-aqueous electrolyte secondary battery according to claim 1 or 2, having, in an infrared absorption spectrum, an absorption peak at at least one of positions around 1238 $cm^{-1}$, 1175 $cm^{-1}$, 1065 $cm^{-1}$, and 785 $cm^{-1}$.

**9.** A non-aqueous electrolyte secondary battery, comprising a positive electrode containing the positive electrode active

material according to claim 1 or 2, a negative electrode, and a non-aqueous electrolyte, wherein the negative electrode contains S.

Figure 1

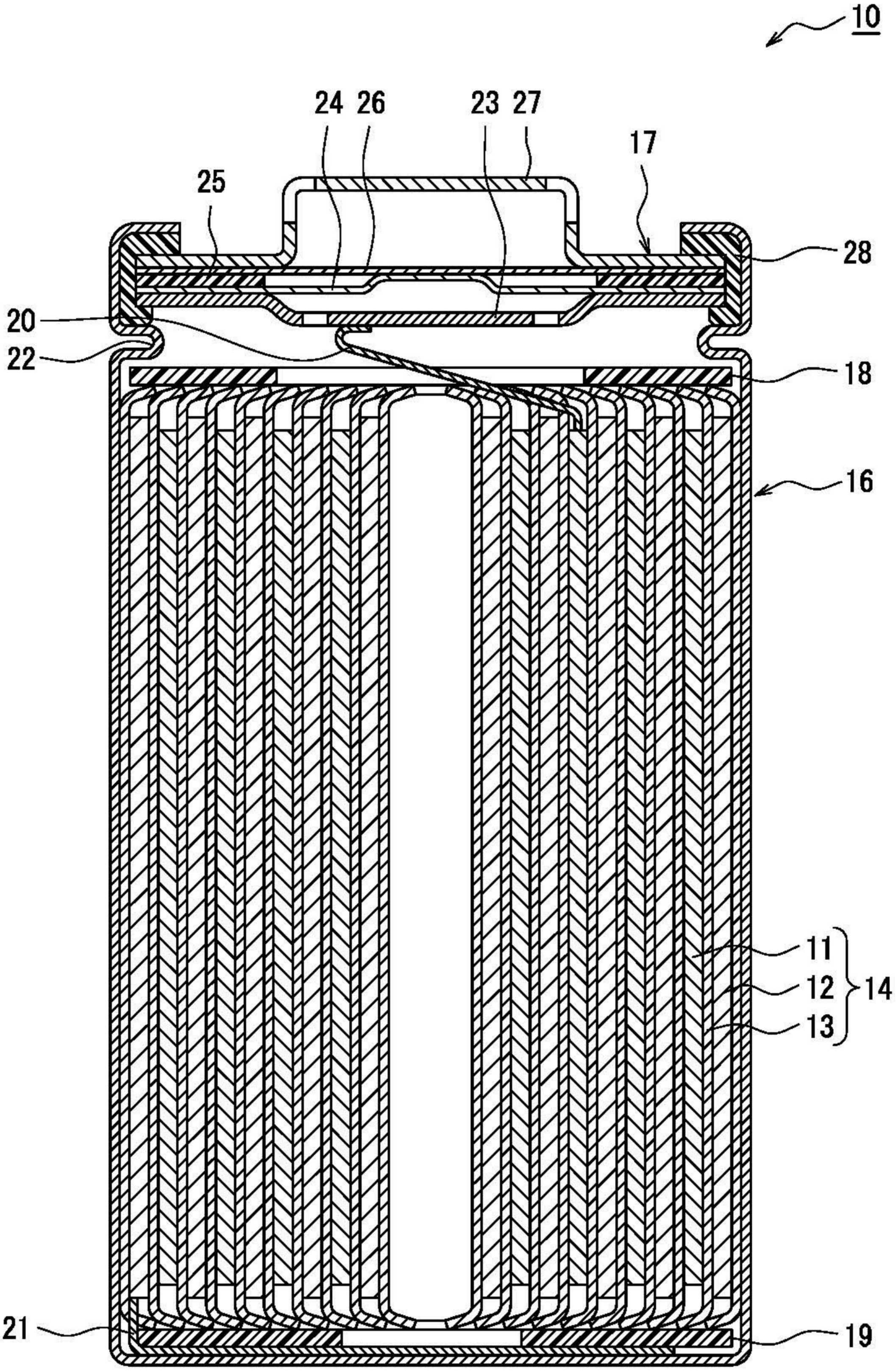

## INTERNATIONAL SEARCH REPORT

International application No.
**PCT/JP2024/018129**

**A. CLASSIFICATION OF SUBJECT MATTER**

***H01M 4/525***(2010.01)i; ***H01M 4/36***(2006.01)i
FI: H01M4/525; H01M4/36 C

According to International Patent Classification (IPC) or to both national classification and IPC

**B. FIELDS SEARCHED**

Minimum documentation searched (classification system followed by classification symbols)

H01M4/525; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-169286 A (TDK CORPORATION) 03 October 2019 (2019-10-03) claims, paragraphs [0019]-[0035], example 15 | 1-9 |
| A | JP 2009-193780 A (SONY CORPORATION) 27 August 2009 (2009-08-27) | 1-9 |
| A | JP 2009-187940 A (SONY CORPORATION) 20 August 2009 (2009-08-20) | 1-9 |
| A | CN 109616657 A (LANGFANG INSTITUTE OF PROCESS ENGINEERING, CAS) 12 April 2019 (2019-04-12) | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018129**

| Patent document cited in search report | Publication date (day/month/year) | Patent family member(s) | Publication date (day/month/year) |
|---|---|---|---|
| JP 2019-169286 A | 03 October 2019 | (Family: none) | |
| JP 2009-193780 A | 27 August 2009 | US 2009/0202905 A1<br>US 2012/0231335 A1<br>KR 10-2009-0087820 A<br>CN 101510605 A | |
| JP 2009-187940 A | 20 August 2009 | (Family: none) | |
| CN 109616657 A | 12 April 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019169286 A